# EUROPEAN PATENT APPLICATION

(11) **EP 1 953 894 A2**
(43) Date of publication of application: **06.08.2008**
(21) Application number: 08425047.1
(22) Date of filing: 30.01.2008
(51) Int. Cl.: H02J 9/02

(54) **Electronic control system for recharging batteries, in particular for emergency lighting lamps.**

(30) Priority: 31.01.2007 IT VI20070029
(71) Applicant: Beghelli S.p.A., 40050 Monteveglio, Bologna (IT)
(72) Inventor: Beghelli, Gian Pietro, c/o Begelli S.p.A., 40050 Monteveglio, Bologna (IT)
(74) Representative: Iannone, Carlo Luigi

(57) **Abstract**

An electronic control system for recharging batteries, particularly for emergency lighting lamps, including a single AC/DC converter (CV), which supplies the power LEDs (L1, L2) of each emergency lighting lamp at a constant current and is suitable to recharge the battery (B) through a "Buck" DC/DC converter (CV1), directly controlled by a microprocessor (MP); the system values the energy used during the discharge of the battery (B) and restores this energy so as to bring the battery (B) in the state of full recharging. After recharging, the system completely disconnects the battery (B) in order to reduce energy consumption to a minimum, and then continually monitors the voltage of the battery (B), arranging for a possible appropriate recharging cycle if this voltage drops below a predetermined minimum value.

## Description

This invention relates to an electronic control system for recharging batteries, in particular for emergency lighting lamps.

More specifically, the invention refers to a system of recharging NiCd and NiMH batteries for emergency lighting lamps having, in particular, power LEDs as lighting sources.

It is known that the emergency lamps are usually powered by a accumulators battery, which becomes operative and provides the power needed to the lamp lighting automatically, when, for whatever reason, a temporary lack of electricity supply from the main energy supply system occurs.

Therefore, the accumulator battery must necessarily remain at a recharging level sufficient to provide the appropriate current intensity for the operation of all emergency lamps connected to it.

In this regard, the battery is powered by the main system, during its normal functioning, using a charging device which is designed to arrange a recharge cycle of the battery itself, in case the charge level is less than one given value.

In particular, regulations in force in the field lay down the optimal energy increases which an accumulator battery must reach during recharging, and the maximum time within which re charging must be carried out; the same regulations also provide for the various methods of verifying the operation autonomy of the aforementioned battery.

In any case, currently, the recharging systems of NiCd or NiMH batteries which deliver electricity to the emergency lamps recharge with a continuous "trickle" current approximately equal or superior to C/20.

Besides, the power LEDs of the emergency lamps are usually fed by the main supply system through an AC/DC converter, and by two additional converters, one of which is used for recharging and the other for powering the LEDs, while the supply interruption is done by interrupting the supply line of the LEDs.

All this leads to an electricity consumption which would be desirable to reduce for a better use of the battery and in compliance with the most recent recommendations and regulations in theme of energy consumption.

The purpose of the present invention is, therefore, to offset the cited drawbacks and, in particular, to realize an electronic control system for recharging batteries, particularly for emergency lighting lamps, which enables to achieve a better use of the batteries, extending the life of the same.

Another purpose of the present invention is to create an electronic control system for recharging batteries, particularly for emergency lighting lamps, which allows to reduce, compared to the prior art, the electricity consumption absorbed in the idle lamp phase.

Further purpose of the present invention is to realize an electronic control system for recharging batteries, particularly for emergency lighting lamps, which ensures compliance with the current regulations in force in the field concerning electricity and which results highly reliable and efficient.

These and other purposes are achieved by an electronic control system for recharging batteries, particularly for lighting emergency lamps, according to the attached claim 1; other technical characteristics of detail are present in the subsequent claims.

In an advantageous way, according to the invention, there is a quick recharge of the batteries with a current equal to about C/10 for a time calculated on the basis of the lost capacity in the emergency phase and, therefore, the recharging is completely stopped.

Only if the battery voltage drops below a certain predetermined value and after a prefixed time, a brief recharging is made for restoring the self discharge of the battery.

Furthermore, feeding of the power LEDs of the emergency lighting lamps occurs directly using an AC/DC converter and recharging is made directly exploiting the voltage present on the same LEDs.

This leads to a better use of the battery, extending the life thereof.

Furthermore, the electricity consumption absorbed during the idle lamp phase is reduced.

Further aims and advantages of the present invention will be clear from the description that follows, related to an illustrative and preferred, but not limited to, example of realization and from the attached drawings, where:
figure 1 shows a provisional block diagram of an electronic control system for recharging batteries, in particular for emergency lighting lamps, of the traditional type;
figure 2 shows a provisional block diagram of an electronic control system for recharging batteries, in particular for emergency lighting lamps, in accordance with the present invention;

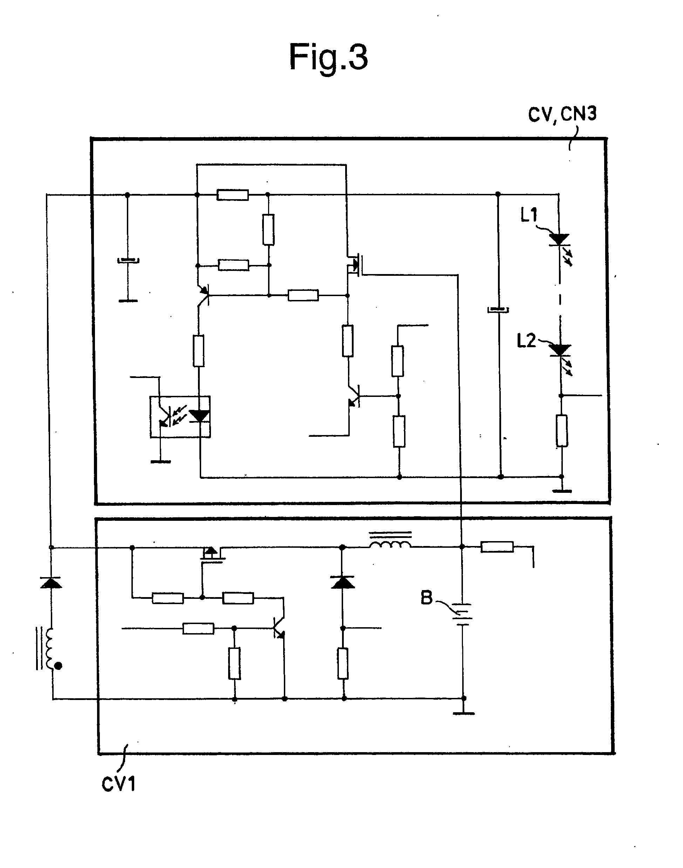

figure 3 shows a provisional electric scheme of the electronic control system for recharging batteries, in particular for emergency lighting lamps, of figure 2, in accordance with the present invention.

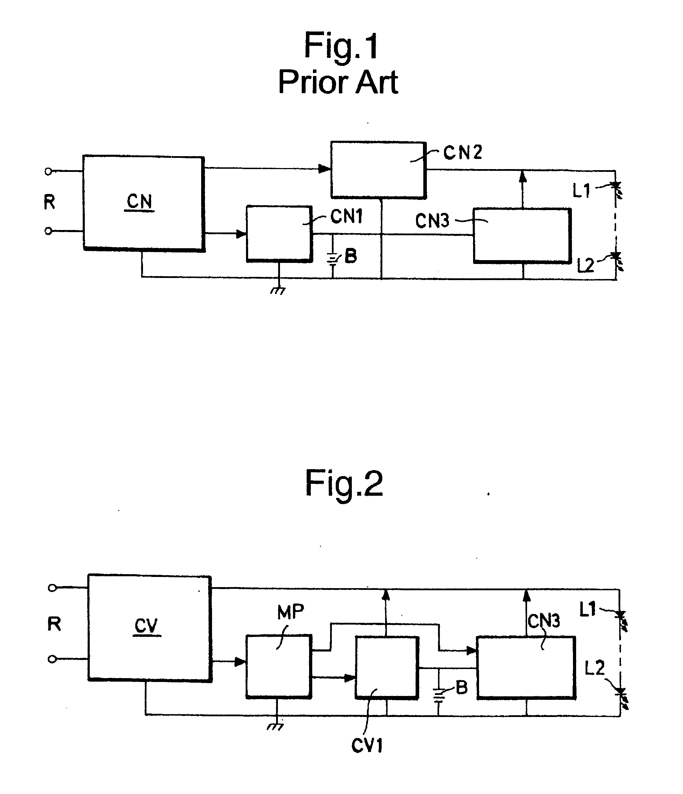

With particular reference to figure 1, which refers to an electronic control system for recharging batteries, especially emergency lighting lamps, of the known type, it is possible to observe as currently the power LEDs L1, L2 of the emergency lighting lamp are fed by the main system R through a CN converter of the AC/DC type and by two additional converters of the DC/DC type, of which a first converter, of the "Buck" type, indicated with CN1, is suitable to recharge the battery B, and a second converter, indicated with CN2, controlled in current, is suitable to supply the power LEDs L1, L2.

Supply interruption occurs by interrupting the supply line of the power LEDs L1, L2 of the respective emergency lamp, through the DC/DC converter, of the "Boost" type, indicated with CN3, controlled in current.

According to the present invention, instead, the power LEDs L1, L2 can be enabled, through selector, to operate permanently or not permanently and the electronic system object of the invention supplies the series of power LEDs L1, L2 at a constant current and recharges the battery B in the proper way, starting from a single CV converter, of the AC/DC type, suitable to regulate the current to the LEDs L1, L2 and/or to adjust the voltage of the battery B (Figure 2).

The CV converter directly supplies the power LEDs L1, L2 and the recharging is made directly exploiting the voltage present on the same LEDs.

Moreover, at the end of the recharging, in case of non-permanent operation and in the presence of the system supply, the system is set in the modality of very low consumption of electricity.

The battery B is recharged through a "Buck" converter CV1, of the DC/DC type, directly controlled by a microprocessor MP, which calculates the actual recharging current through an appropriate algorithm which takes into account the tension present to the clips of the battery B, the current present in the recirculation diode of the "Buck" converter CV1 and a value of "Duty Cycle" set by the microprocessor MP itself.

As in known art, then, supply interruption is made by interrupting the supply line of the LEDs L1, L2 of the emergency lighting lamp, through the CN3 converter ("Boost" converter), of the DC/DC type, controlled in current.

The system according to the invention is thus able to value the energy used during the discharge of the battery B and to restore said energy, in order to bring the battery B again in the state of full recharge.

At the end of the recharging, the system completely disconnects the battery B, in order to reduce consumption to a minimum, however, continuing to monitor on a continuous way the battery voltage B and providing to a possible appropriate recharge cycle where such tension drops below a predetermined threshold value.

The functioning of the electronic control system for recharging batteries, particularly for emergency lighting lamps, according to the invention, is essentially as follows.

In practice, the system integrates the supply circuits of the power LEDs L1, L2 of the emergency lighting lamp and the recharging circuits respectively in the phases of present system supply R (in permanent or not permanent arrangement) and of emergency.

As a matter of fact, under the presence of the supply system R and the enabling of the emergency lamp, through an appropriate selector, operating on a permanent way, the power LEDs L1, L2 of the emergency lighting lamp are directly supplied by the converter CV, of the AC/DC type and controlled in current; this allows to ensure the circulation in LEDs L1, L2 of the best current intensity to guarantee the issuance of a spectrum of nominal light.

Alternatively, under the presence of the supply system R and the enabling of the emergency lamp, through the appropriate selector, to operate on a non-permanent way, the system adjusts the output voltage of the converter CV below the conduction threshold of the power LEDs L1, L2, so that, even in presence of supply system R, current does not flow in the LED L1, L2.

Finally, under the lack of the supply system R (emergency condition), the power LEDs L1, L2 of the emergency lighting lamp are supplied by the battery B, through the "Boost" converter CN3, controlled in turn by the microprocessor MP in such a way to keep the optimal current in the LEDs L1, L2.

Furthermore, the microprocessor MP measures the average current flowing in the power LEDs L1, L2 and provides for the impulsive current regulation in order to ensure a constant luminous flux.

From the description made the characteristics of the electronic control system for recharging batteries, particularly for emergency lighting lamps, which is the subject of the present invention, are clear, as clear are the advantages thereof.

In particular, they are represented by:
- installation and wiring flexibility, simplicity and quickness of the system;
- use versatility of the system on existing plants;
- ease of integration with other electric systems and reliability from the point of view of use ease and intervention modalities;
- batteries recharging times and cycles shorter than those of the known technique;
- compliance with the national regulations and international in force in the field;
- better use of the batteries and extension the life of the same, with respect to the known art;
- reduction of the electricity consumption during idle lamp phase with respect to the known art.

It is clear that many other variations can be made to the control system of the recharging in question, without for this reason going out of the novelty principles inherent in the inventive idea, as it is clear that, in the practical implementation of the invention, materials, shapes and sizes of the illustrated details could be any depending on the needs and the same could be replaced by others equivalent.

## Claims

1. Electronic control system for recharging batteries, in particular for emergency lighting lamps having as lighting source power LEDs (L1, L2), **characterized by** the fact that at least a first AC/DC converter (CV) supplies said power LEDs (L1, L2) and is suitable to recharge the battery (B), by at least a second DC/DC converter (CV1), placed at the clips of said LEDs (L1, L2) and directly controlled by at least a microprocessor (PM).

2. Control system as to claim 1, **characterized by** the fact that the recharging current of the battery (B) is calculated by said microprocessor (MP) by an algorithm, starting from the values of the battery (B) voltage, of the recirculating current of said second DC/DC converter (CV1) and of the "Duty-Cycle" set within said microprocessor (MP).

3. Control system as to claim 1, **characterized by** the fact that said microprocessor (MP) values the energy used during the battery (B) discharge and restores said energy in such a way to bring the battery (B) again in a state of full recharge.

4. Control system as to claim 1, **characterized by** the fact that said microprocessor (MP), at the end of the recharging, completely disconnects the battery (B), in order to reduce energy consumption to a minimum.

5. Control system as to claim 4, **characterized by** the fact that said microprocessor (MP), following up the disconnection of the battery (B), continuously monitors the value of the voltage present to the clips of the battery (B), providing for at least an eventual appropriate recharge cycle, in case said value of the voltage is below to a predetermined minimum value.

6. Control system as to claim 1, **characterized by** the fact that each emergency lighting lamp is controlled by said microprocessor (MP), in order to be arranged and empowered to operate under conditions of lack of the supply system (R) and in emergency modality or under conditions of presence of the supply system (R) and in permanent or not permanent modality.

7. Control system as to claim 1, **characterized by** the fact that the said first AC/DC converter (CV) provides for a recharge of said battery (B) for a time calculated on the basis of the lost energy in the emergency phase and, therefore, the recharging is completely stopped.

8. Control system as to claim 1, **characterized by** the fact that the said first AC/DC converter (CV) supplies said power LEDs (L1, L2) at constant current.

9. Control system as to claim 6, **characterised by** the fact that, under the presence of the supply system (R) and the permanent modality of operation, said power LEDs (L1, L2) are directly supplied by said first AC/DC converter (CV) controlled in current in order to ensure the circulation in the LEDs (L1, L2) of the of adequate current intensity to guarantee the emission of the spectrum of nominal light.

10. Control system as to claim 6, **characterised by** the fact that, under the presence of the supply system (R) and the non-permanent modality of operation, said microprocessor (MP) regulates the output voltage of said first AC/DC converter (CV) to a value below the conduction threshold of said power LEDs (L1, L2), so that, even in presence of the supply system (R), the current does not flow in said LEDs (L1, L2).

11. Control system as to claim 6, **characterised by** the fact that, under the lack of the supply system (R) and the emergency modality, said power LEDs (L1, L2) are supplied by said battery (B) through at least one third DC/DC converter (CN3), controlled in turn by said microprocessor (MP), in order to keep the best current intensity in the LEDs (L1, L2), said microprocessor (MP) being suitable to measure the average current flowing in the power LEDs (L1, L2) and to provide for the regulation of the impulsive current regulation in order to ensure a constant luminous flux.
